# EUROPEAN PATENT APPLICATION

(11) **EP 1 296 238 A2**
(43) Date of publication of application: **26.03.2003**
(21) Application number: 02009766.3
(22) Date of filing: 30.04.2002
(51) Int. Cl.: G06F 9/46, H04L 29/08

(54) **Unified interprocess communication**

(30) Priority: 04.09.2001 US 316301 P; 04.01.2002 US 35187
(71) Applicant: SAMSUNG ELECTRONICS Co. Ltd., Kyungki-do, Seoul (KR)
(72) Inventor: Yun, Yeong-Hyun, Suwon-city, Kyungki-do (KR)
(74) Representative: Grünecker, Kinkeldey, Stockmair & Schwanhäusser Anwaltssozietät

(57) **Abstract**

A unified interprocess communication system, and a unified interprocess communication method, which are compatible with different hardware and software. The unified interprocess communication system can be used with any equipment, regardless of the communication method used. The unified interprocess communication (UIPC) method is highly portable because the UIPC method introduces a device independent access layer (DIA) into the system and loosely couples the interprocess communication to each hardware device.

## Description

The present invention relates to a unified interprocess communication system, and more particularly to a unified interprocess communication system and method that can be utilized for communication regardless of the hardware and the software used.

A communication system can be provided with various types of communication equipment and module, such as asynchronous transfer mode (ATM), synchronous digital hierarchy (SDH), and Internet protocol (IP), for example. In such a communication system, each system uses an interprocess communication (IPC) method which is different from the other system. The IPC is tightly coupled to and depends on the respective hardware device of each system. For example, an asynchronous transfer mode system uses an IPC method which is different than the IPC method made by a synchronous digital hierarchy system.

The communication methods of such communication systems are different from each other, depending on the respective equipment and implementor of the systems. Such systems incur undesirable costs and overhead in implementing the IPC into the systems and are disadvantageous due to the lack of reusability and portability.

To solve these and other problems in the art, it is the object of the present invention to provide an improved interprocess telecommunication system which can be used in any equipment regardless of the communication method.

According to an aspect of the present invention, there is provided an interprocess communication method able to improve the portability of the IPC by introducing a device independent access layer (DIA) into the system and by loosely coupling the IPC to each hardware device.

According to another aspect of the present invention, there is provided a communication apparatus for transmitting message data from a source to a destination regardless of what operating system is being used in the communication apparatus. The present invention provides a high amount of portability and flexibility.

According to still another aspect of the present invention, there is provided a communication method for transferring message data from a source to a destination regardless of what hardware equipment is being used in the communication apparatus.

According to still another aspect of the present invention, there is provided a communication apparatus for transmitting message data from a source to a destination regardless of what communication methods (for example asynchronous transfer mode, Internet protocol, synchronous digital hierarchy, and others) are used by the apparatus.

To achieve the above object in accordance with the principles of the present invention, as embodied and broadly described, the present invention provides a communication method for conveying message data from a source to a destination, the method comprising: transmitting message data independently of an operating system of a communication apparatus, said transmitting being performed at least in part by an operating system independent access layer; and transferring message data independently of hardware of the apparatus, said transferring being performed at least in part by a device independent access layer.

The present invention further provides a communication apparatus for transferring message data from a source to a destination, the apparatus comprising: an operating system portion of the apparatus processing internal communications within said apparatus independently of an operating system of said apparatus; and a hardware portion of the apparatus processing external communications to and from said apparatus independently of hardware devices in said apparatus.

The present invention further provides a computer storage medium having stored thereon a set of instructions implementing a method for conveying message data from a source to a destination, said set of instructions comprising one or more instructions for: transmitting message data independently of an operating system of a communication apparatus, said transmitting being performed at least in part by an operating system independent access layer; and transferring message data independently of hardware of the apparatus, said transferring being performed at least in part by a device independent access layer.

The present invention is more specifically described in the following paragraphs by reference to the drawings attached only by way of example. Other advantages and features will become apparent from the following description and from the claims.

In the accompanying drawings, which are incorporated in and constitute a part of this specification, embodiments of the invention are illustrated, which, together with a general description of the invention given above, and the detailed description given below, serve to exemplify the principles of this invention.
Fig. 1 shows logically-arranged functional blocks of software, in accordance with the principles of the present invention;
Fig. 2 is a network between a system controller and each shelf for message exchanges, in accordance with the principles of the present invention;
Fig. 3 shows a shared bus topology constructed in accordance with the principles of the present invention;
Fig. 4 shows a star bus topology for intershelf messages, in accordance with the principles of the present invention;
Fig. 5 is a client application sending message to a service location, in accordance with the principles of the present invention; and
Fig. 6 is a test methodology to verify the component functionality, in accordance with the principles of the present invention.

While the present invention will be described more fully hereinafter with reference to the accompanying drawings, in which preferred embodiments of the present invention are shown, it is to be understood at the outset of the description which follows that persons of skill in the appropriate arts may modify the invention here described while still achieving the favorable results of this invention. Accordingly, the description which follows is to be understood as being a broad, teaching disclosure directed to persons of skill in the appropriate arts, and not as limiting upon the present invention.

Illustrative embodiments of the invention are described below. In the interest of clarity, not all features of an actual implementation are described. In the following description, well-known functions or constructions are not described in detail since they would obscure the invention in unnecessary detail. It will be appreciated that in the development of any actual embodiment numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill having the benefit of this disclosure.

Interprocess communication (IPC) refers to an exchange of data between one process and another, either within the same computer or over a network. IPC implies a protocol that guarantees a response to a request. IPC can be performed automatically by programs.

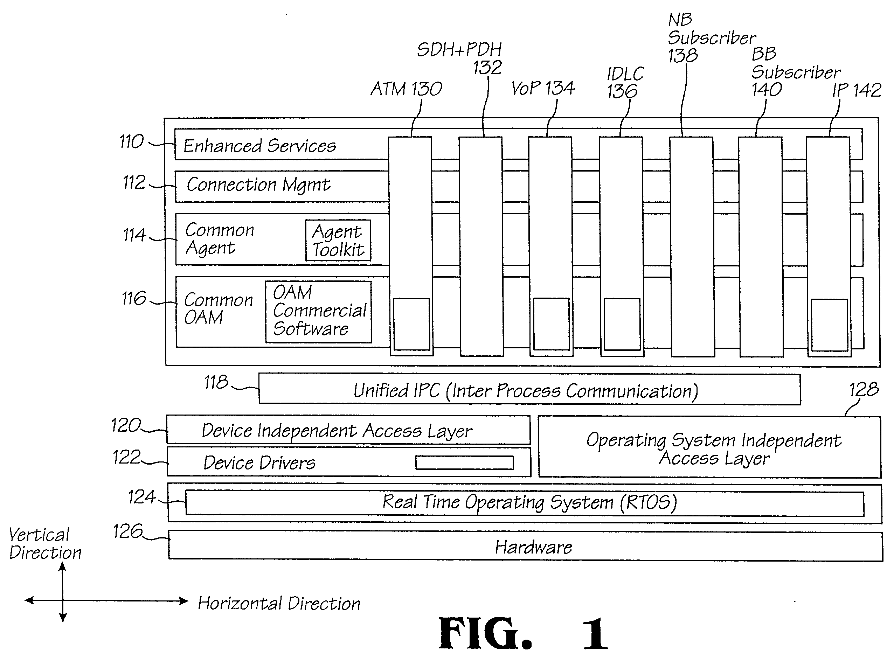

Fig. 1 shows logically-arranged functional blocks of software, in accordance with the principles of the present invention. Fig. 1 shows Enhanced Services 110, Connection Management 112, Common Agent 114, Common OAM (operation, administration, and maintenance) 116, Unified Inter Process Communication (UIPC) 118, Device Independent Access (DIA) Layer 120, Device Drivers 122, Real Time Operating System 124, Hardware 126, Operating System Independent Access (OIA) Layer 128, Asynchronous Transfer Mode (ATM) 130, Synchronous Digital Hierarchy (SDH) and plesiochronous digital hierarchy (PDH) 132, Voice over Packet (VoP) 134, Integrated Digital Loop Carrier (IDLC) 136, narrow band (NB) Subscriber 138, broad band (BB) Subscriber 140, and Internet Protocol (IP) 142.

Fig 1 shows some items arranged in a horizontal direction, and shows other items arranged in a vertical direction. The horizontal direction shall be discussed first. Common items of the equipment, such as enhanced services, connection management, common agent, common OAM (operation, administration, and maintenance), unified interprocess communication (UIPC), and real time operating system (RTOS), and others, are shown to be arranged in the horizontal direction.

The vertical direction shall be discussed now. Other items, such as asynchronous transfer mode (ATM), synchronous digital hierarchy (SDH), plesiochronous digital hierarchy (PDH), voice over packet (VoP), integrated digital loop carrier (IDLC), narrow band (NB) subscriber, broad band (BB) subscriber, and Internet protocol (IP), are shown to be arranged in the vertical direction. The items arranged in the vertical direction are typically dependent upon the characteristics of each particular piece of equipment used. Depending on the respective communication system used, one of software modules arranged in the vertical direction may be eliminated.

The upper portions of Fig. 1, from "Enhanced Services" to "Common OAM," depend on the application of the software.

The present invention is related to the unified interprocess communication (UIPC) which communicates with both internal portions of the unit of the system and external communication system.

The internal communication of the system is processed in operating system portions of the UIPC, and the external communication of the system is processed in the portions including the hardware portion of the UIPC.

An operating system independent access layer (OIA) processes communication functions regardless of the type of the operating system. A device independent access layer (DIA) is included in the present invention. The UIPC includes application program interface (API) and protocol stack which is described below.

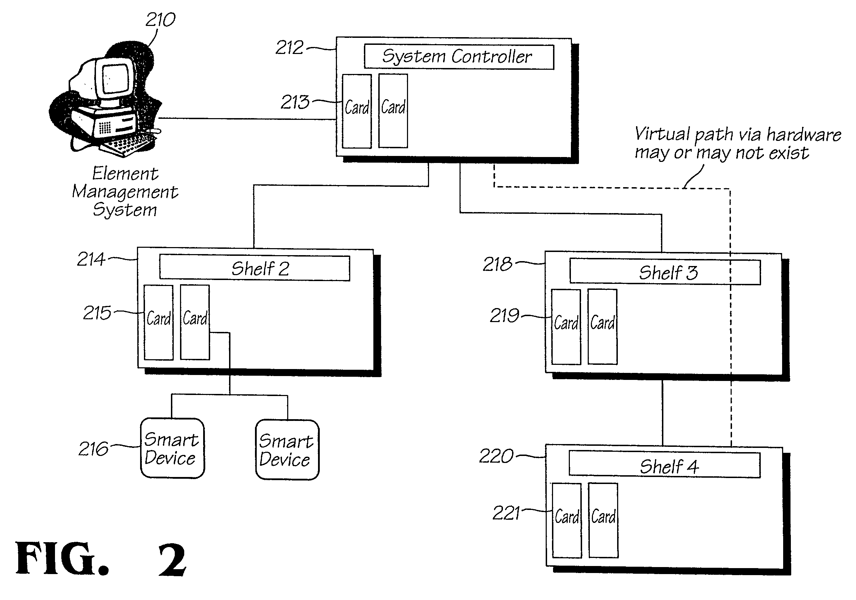

Fig. 2 is a network between a system controller and each shelf for message exchanges, in accordance with the principles of the present invention. Fig. 2 shows a supported network topology, including Element Management System 210, System Controller 212 with card 213, Shelf 2 (214) with card 215, Smart Device 216, Shelf 3 (218) with card 219, and Shelf 4 (220) with card 221.

In Fig. 2, in order for shelf 4 (220) to communicate with the system controller 212, although the communication between shelf 4 (220) and the system controller 212 physically passes through shelf 3 (218), there exists a conceptional direct path between shelf 4 (220) and the system controller 212 constructed according to the principles of the present invention.

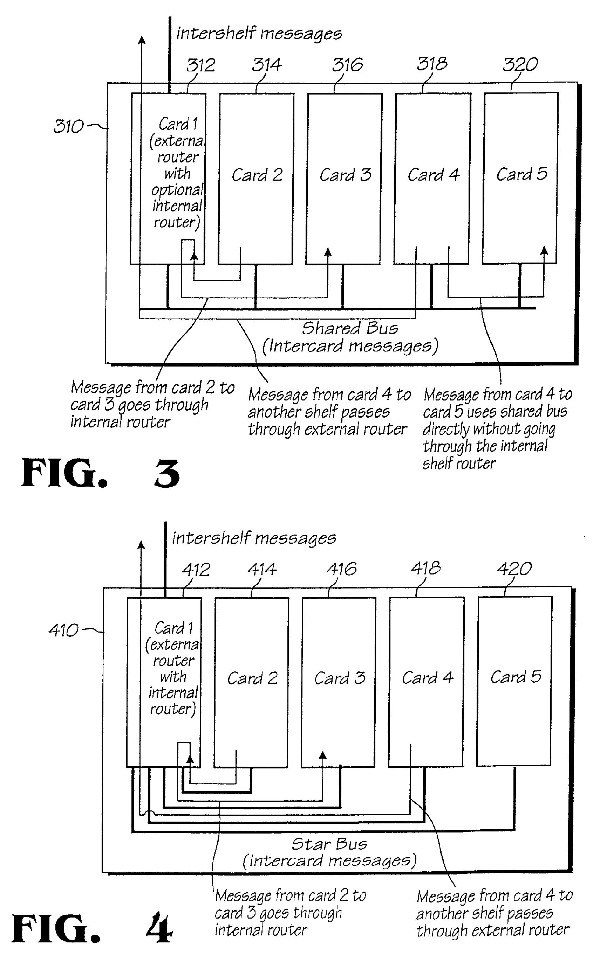

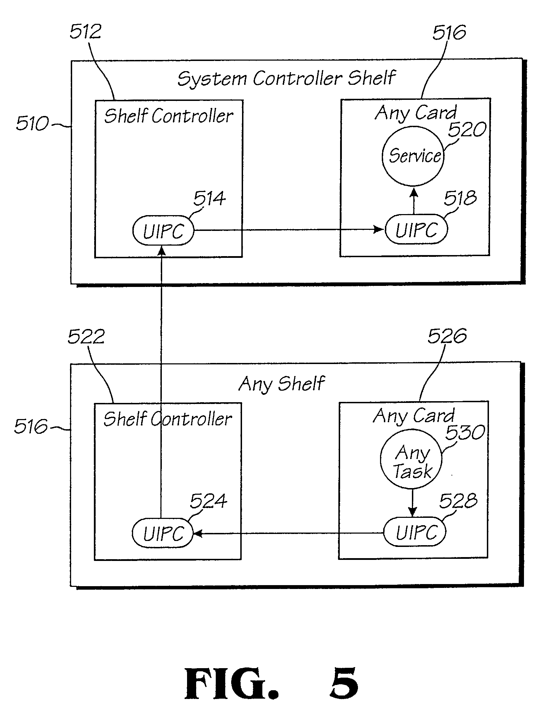

In the section hereinbelow entitled Bus Topology, the flexibility of the present invention is shown when the present invention is used in the inter communication between shelves regardless of the type of bus topology. In other words, the present invention can be used in the inter communication between shelves in a shared bus type of topology (Fig. 3) and in a star bus type of topology (Fig. 4). Fig. 3 shows a shared bus topology constructed in accordance with the principles of the present invention. Fig. 4 shows a star bus topology for intershelf messages, in accordance with the principles of the present invention.

In the section hereinbelow entitled Application Types, additional features of the present invention are shown, concerning a process of communication when a card of a first shelf communicates with a card of a different shelf (Fig. 5). Fig. 5 is a client application sending message to a service location, in accordance with the principles of the present invention. In the section hereinbelow entitled Application IDs, there are shown application IDs of software used to delete and add the software depending on a system user. In the section hereinbelow entitled UIPC Network Address, the network address is shown to be used to get a message to processors or entities that can route messages.

A functional description for the Unified Interprocess Communication (UIPC) component is contained herein, regarding the software functionality and interfaces of the component. UIPC provides a means whereby messages are routed between tasks on the same card, same shelf, or different shelves.

The following eight documents provide background and additional information for this document: Open Systems Interconnection, Basic Reference Model, ITU-T X.200; Open Systems Interconnection, Data Link Service Definition, ITU-T X.212; Open Systems Interconnection, Network Service Definition, ITU-T X.213; Open Systems Interconnection, Transport Service Definition, ITU-T X.214; Common Software Platform System Architecture Document, Aztek Part Number 70881; DIA Component Description, Aztek Part Number 70891; UIPC detail level design, LTITL Part Number SDC005-UIPC; and OIA Component DLD, LTITL Part Number SDC005-OIA.

The following definitions and acronyms are used throughout this document: the term "API" refers to Application Program Interface; the term "EMS" refers to Element Management System; the term "hop" refers to one path in the transmission of a message over consecutive paths; the term "link" refers to the connection between two physical endpoints; the term "NE" refers to Network Element; the term "network element" refers to a unit that is separately managed by the element management system (a network element may consist of one or more local or geographically distributed shelves); the term "node" refers to any element of the UIPC communication network that is separately addressable; and the term "smart endpoint" refers to a device attached to a card that can receive messages (an example of such a device is a DSL modem).

The term "UIPC" refers to Unified Interprocess Communication (UIPC can also refer to Universal Interprocess Communication); the term "OIA" refers to Operating System Independent Adaption layer; the term "DIA" refers to Device Independent Adaptation layer; the term "DSL" refers to Digital Subscriber Line; the term "IADs" refers to Integrated Access Devices; the term "RTOS" refers to Real Time Operating System; and the term "TCP/IP" refers to Transport Control Protocol over Internet Protocol.

### Component Overview

The UIPC component of the present invention is intended to be used for all intraprocessor and interprocessor communications between applications. This section includes a description of the network element topologies supported by the present invention, a basic description of the addressing used by the present invention, and a description of application models supported by the UIPC of the present invention.

The following characteristics are included in the UIPC of the present invention and other elements of the present invention. The UIPC provides bi-directional messaging between tasks anywhere within a network element. The UIPC allows applications to send messages asynchronously. The application program interface (API) will return immediately without blocking. The UIPC allows applications to send messages and synchronously wait for a response with a timeout. The UIPC abstracts the underlying physical transport mechanism. An application needing to communicate with a service is required to know the location of that service. Service applications are described in the section hereinbelow entitled Application Types: Services.

The following additional characteristics are included in the UIPC of the present invention and other elements of the present invention. The UIPC provides a mechanism whereby messages can be broadcast. Low-level UIPC protocols are able to be changed without changing upper layer protocols. Upper-level UIPC protocols are able to be changed without changing lower layer protocols. The UIPC detects transmission errors and retries errored packets on a link-by-link basis (this implies that the link-layer of the protocol, which handles each link, is required to cause that link to be reliable). The same UIPC application program interface (API) is used for intraprocessor and interprocessor communication. The UIPC performs fragmentation and reassembly of large messages. The UIPC allows end-to-end connection-oriented and connectionless communication. The UIPC provides a mechanism to enable debug output. UIPC Protocol parameters are settable at run-time. The UIPC provides a mechanism to set the maximum transmission unit for each link. The UIPC accommodates hops with varying maximum transmission units. The UIPC supports message priority for real-time critical messages. The UIPC is operating system independent. The UIPC allows messages to be passed transparently from a controller to devices attached to cards (these devices may or may not speak the UIPC protocol). The UIPC allows messages to be routed from any shelf to any other shelf within a network element. The UIPC provides an application program interface (API) for the reporting of protocol errors and statistics.

In addition to the above characteristics of the present invention, the characteristics of real-time system design are taken into consideration for the present invention. The relevant characteristics of real-time system design are as follows.

In real-time systems, some messages must be delivered within some time limit. This implies that the maximum transmission unit of a packet at the lowest levels of the protocol stack must be small enough so that large messages do not consume the bandwidth of the communications pipe.

In real-time systems, processor or communications bandwidth may be limited. This implies the need for efficiency. Processing of messages should be minimal. Protocol overhead should be minimized. There is a tradeoff between functionality and efficiency. A protocol stack like TCP/IP is feature rich, but carries a lot of overhead to implement these features. A protocol tailored to a real-time system is likely to minimize the protocol overhead for the sake of efficiency and be optimized for the most common type of messaging. This means features may be limited. The few applications that need additional features may have to participate in supplying any additional functionality rather than depending on the protocol stack to supply the needed features.

In real-time systems, real time operating systems (RTOSs) do not generally allow a task to wait on multiple endpoints. As a result, tasks are usually implemented with one message queue that may receive messages from multiple sources such as other tasks or interrupt service routines (ISRs). This implies that the UIPC needs to support tasks that are structured with a single message queue.

In real-time systems, real time operating systems (RTOSs) generally provide a flat memory model whereby all tasks may access all memory. In this model, tasks may share data without the overhead of passing data in messages or operating system overhead used to implement shared memory. Some real time operating systems (RTOSs) may provide a protected memory model that limits the memory that any task can access. Communication between tasks in such a model relies on message passing or the use of shared memory. The memory model does not affect the application program interface (API) or protocol definitions presented in this specification. However, it does affect the implementation of these components. Where implementation suggestions are made, this specification will assume the more common flat memory model.

### Network Element Topology

Network elements represent separately managed pieces of equipment. A network element may consist of one or more local or geographically distributed shelves. The manner in which a network element is distributed is called the network element topology. The topology that the UIPC of the present invention supports is a tree structure. There may be a main system controller shelf connected to multiple other shelves.

Any shelves that are subtended off of other shelves may or may not have a direct hardware connected communication path to the system controller. Software routing functionality is provided for communication between any shelves. It is independent of network topology. There are twokinds of routing mechanisms; one is static routing and the other is dynamic routing.

In addition to the shelves, each shelf has cards. Cards may have smart devices attached to them that may or may not communicate via the UIPC protocol. These cards and devices can be viewed as branches or leaves in the tree structure.

Fig. 2 is a network between a system controller and each shelf for message exchanges, in accordance with the principles of the present invention. Fig. 2 shows a supported network topology, including Element Management System 210, System Controller 212 with card 213, Shelf 2 (214) with card 215, Smart Device 216, Shelf 3 (218) with card 219, and Shelf 4 (220) with card 221.

Fig. 2 shows the network topology for which the UIPC of the present invention is designed. The UIPC of the present invention supports message exchanges between tasks on individual cards, between tasks on different cards on the same shelf, between tasks on any shelf, and also between tasks on any shelf and attached smart devices (for example, digital subscriber line modems and integrated access devices).

Note that it is assumed that if it is ever needed, messages that need to go between two shelves are assumed to be routed through the system controller shelf 212. This simplifies the protocol and reduces the overhead that would be associated with a protocol such as Internet protocol (IP), which handles a more generalized network topology. Note also that the element management system 210 can also communicate via UIPC. Messages can be routed between the element management system 210 and any card on any shelf. An element management system (EMS) 210 can look just like any other shelf as far as the UIPC is concerned.

### Bus Topology

The above-described network topology defines the system of the present invention from an external point of view. Now a bus topology shall be described. The bus topology describes a shelf of the present invention from an internal point of view. The design of the bus topology affects how messages flow through and between cards on a shelf. Bus topologies are either a shared bus type (Fig. 3) or a star bus type (Fig. 4).

In the shared bus type topology, it may be possible for any card to communicate with any other card. However, some shared bus designs only allow cards to talk to a single master. In a star bus type topology, each card connects to a central hub.

Regardless of the topology, some connection to the outside world must exist. Control messages arriving at the shelf from an external source will be processed by a single card in either one of the two types of bus topology. Thus, one card will always have some functionality to route messages between external systems and the cards.

Fig. 3 shows a shared bus topology constructed in accordance with the principles of the present invention. Fig. 3 depicts shelf 310 having card 1 (312), card 2 (314), card 3 (316), card 4 (318), and card 5 (320).

In Fig. 3, the shelf 310 includes a card 1 (312) that has an external connection to another shelf (other than shelf 310). Messages to and from that other shelf are routed by card 1 (312) as is shown in a message that is being transmitted by card 4 (318).

Fig. 3 also shows two possible choices for routing messages between cards. In a design that allows any card to talk to any other card, messages can be sent directly between cards if those cards know each other's address. This is shown between cards 4 (318) and 5 (320). It is the most efficient means of getting a message between cards. However, for the sake of simplicity, the implementation may choose to route all intercard messages through a central router 312 as shown in the message transmitted from card 2 (314) to card 3 (316). This method would also be used for shared buses that require all messages to go through a master. Note that the UIPC described later includes a routing mechanism for each card and for the shelf that can accommodate both direct card-to-card and centralized routing. It only depends on how each card's routing table is populated.

Fig. 4 shows a star bus topology for intershelf messages, in accordance with the principles of the present invention. Fig. 4 depicts shelf 410 having card 1 (412), card 2 (414), card 3 (416), card 4 (418), and card 5 (420). As shown in Fig. 4, in a star bus topology, all messages pass through a central router 412.

### Application Types

There are various types of applications that may exist. For the purposes of this discussion, an application is implemented as a task. All may need to use the UIPC. Some applications do not generally interact with other applications. These are called stand-alone applications. Other applications provide services that are available to other applications. These are called services. Any application that interacts with a service is called a client. Some client applications may also be services themselves. In addition to application types, it is likely that some sort of parent/child relationship exists for each task. Even a stand-alone task will have some task that created it (that is, its parent). Parents may need to communicate with their children for maintenance purposes. For example, a parent task may want to ping its child to make sure that it is functioning properly. Described below are three application types (services, clients, and stand-alone), and also sample client/server message flows between applications.

The first application type is a service. A service is implemented to perform particular tasks such as controlling access to common resources for other applications (clients). To a client it does not matter how or on which card, and possibly which shelf the service is implemented. The use of services as an abstraction allows client tasks to use services regardless of where that service is located. This design is resilient to change since it allows the division of labor among services, cards, or shelves to change without affecting client applications. Only in some cases would an application need to talk to a specific card on another node. Services register themselves with the UIPC using a well-known application ID. An application ID is analogous to a transmission control protocol (TCP) port number that is used when opening a socket connection to a server. When communicating with a service, a client needs to know the application ID of the service. The client must also specify a network address if it needs to talk to a service on a specific unit of hardware such as a shelf or a particular card on a shelf. Examples of well known services might be an OAM (operation, administration, and maintenance) task that handles OAM-related requests, or an alarm manager task that is responsible for receiving alarms.

The second application type is a client. Clients are any applications that talk to services. A service that talks to another service is considered to be a client of that other service. Clients that are not also services do not have a well-known application ID. However, to allow a service to send a response to the client, the UIPC will assign an application ID to a client's message queue so that responses can be routed to the client.

The third application type is a stand-alone. Stand-alone applications are those that do not talk to other applications. Like clients, stand-alone applications do not have well known application IDs.

Now information about sample client/server message flow shall be discussed. There are many combinations of message flows between applications. The key to understanding message flows is that the UIPC contains a routing mechanism to determine where messages should be sent. Each card in the system has a routing function. Each shelf also has a routing function that distributes messages between cards or shelves. To demonstrate the most complex routing that the UIPC supports, refer now to Fig. 5.

Fig. 5 is a client application sending message to a service location, in accordance with the principles of the present invention. Fig. 5 depicts system controller shelf 510 and a shelf 516. The system controller shelf 510 has shelf controller 512 and a card 516. The shelf 516 has shelf controller 522 and a card 526. The card 526 has a client application 530 which can be any task 530. The card 526 has UIPC 528. The shelf controller 522 has UIPC 524. The card 516 has Service X 520 and UIPC 518. The shelf controller 512 has UIPC 514.

Fig. 5 depicts a client application 530 sending a message to Service X 520. The client application 530 is represented by any task 530. In Fig. 5, Service X 520 is implemented on the system controller shelf 510, and the client is implemented on some other shelf 516. The client requests the UIPC 528 to send a message to Service X 520 with network address of the system controler 510. The UIPC 528 on the client's card 526 will forward the message to the shelf router. The shelf router looks up the destination network address. If it is not same as my network address, it will route the message to the system controller 510. The shelf router on the system controller 510 looks up the destination network address and determines that it is implemented on a card 516 in the shelf 510. The message is sent to that card 516. The UIPC 518 on that card 516 then routes the message to the Service X task 520.

### Application IDs

This section explains how well known application IDs may be assigned, used, and known to applications. The maximum number of application IDs available within a card is UIPC_MAX_APP_ID. The maximum number of application IDs available within a card is as allowed by operating system independent access layer (OIA), which corresponds to the maximum number of interprocess communication (IPC) queues that are allowed.

Well-known application IDs are chosen by the application from a range of application IDs bounded by UIPC_MAX_WELL_KNOWN_APP, which is the first half of the values of UIPC_MAX_APP_ID. It is like well-known port numbers used with transmission control protocol (TCP). Application in this context is defined as anything outside of UIPC. This includes the common operation, administration, and maintenance (OAM) components as well as other applications.

For applications that are not well known applications, application IDs are alloted from the other upper half of the values of UIPC_MAX_APP_ID. This range is UIPC_DYN_APP_ID_START (UIPC_MAX_WELL_KNOWN_APP + 1) to UIPC_MAX_APP_ID. These application IDs are assigned when the task wants to either send or receive messages, and are freed once the task has finished with either sending or receiving messages. When these application IDs are freed, they can be reused.

### UIPC Network Address

A network address is used to get a message to processors or entities that can route messages. Thus each card, shelf, rack, or smart endpoint has a unique network address. Shelves may also be organized into racks that may also have a unique network address. Application IDs are also contained within messages to tell the router which application should receive the message. Put more simply, network addresses get a message to a card, and application IDs get messages to tasks on a card.

A network address must be capable of referring to a rack, shelf, card, or smart endpoint attached to a card. To this end, a 32-bit address is defined that is divided into four classes of address, A, B, C, and D. This is similar to Internet protocol (IP) addressing which has 4 classes. Each class consists of 8 bits. Class A represents a rack. Class B represents the address of a shelf in a network element. Class C addresses represent cards. Class D addresses represent smart endpoints. This scheme will allow 256 separate devices on each network or subnetwork. The use of classes of addresses allows routers to mask off fields that they don't care about. This simplifies the routing tables. For example, a message might be destined for a particular device attached to a card. The shelf router can ignore the class D portion of the address since all it needs to know is how to get the message to the card. It does not need any entries in its routing table for devices attached to cards. Likewise, the router on the card can ignore the class A and B portion of the address since all it needs to know is how to get the message to the device.

Special address values are also defined to allow for circumstances where specific addresses are not known or shouldn't be used. For example, an application on one card may need to communicate with a service that it knows is located on the shelf, but does not know where that service is implemented. Special addresses can also be used where routers are dynamically assigned addresses. A network layer control message to an unassigned router (for example, a card) may contain a special kind of address and carry information that allows the unassigned router to take on a new address. Any protocol layer could also use special addresses when communicating protocol control messages. Broadcast of messages is also supported through special addresses.

The following special values can be used as the class A, B, C, or D part of the address. Routers should process them starting at the class A address all the way down to the class D address to determine how to route a message.

The first special value that shall be described is the Any Place value. The Any Place value is 0xFF. When the Any Place value is in the address of a message, the message is directed towards a service that may be on any card (class C portion is this value) or any shelf (class B portion is this value). In other words, when the class C portion of the address has the value 0xFF then the message is directed towards a service that may be on any card, and when the class B portion of the address has the value 0xFF then the message is directed towards a service that may be on any shelf. If a router sees this address as a class value, it should pass the message to the transport layer. The transport layer will determine if a service has registered to receive messages with the application ID in the message.

The second special value that shall be described is the This Place value. The This Place value is 0xFE. If a class of an address has the This Place value, it indicates that the message is terminated on the router receiving the message or on a lower class address if the lower class address(es) do not contain the Ignore (0xFD) value.

The third special value that shall be described is the Ignore value. The Ignore value is 0xFD. If a class has the Ignore value, the address should be terminated on the highest-class router that does not have an 0xFD value. The Ignore value is used when directing messages to specific shelves or cards. The Ignore value is used in router addresses for class B and C routers. A class B router would have an address like 0xXXXXFDFD and a class C router would have an address like 0xXXXXXXFD. Note also that the card on which the shelf router is located could also have its own address, just like any other card.

The fourth special value that shall be described is the Broadcast value. The Broadcast value is 0xFC. A router receiving an address that contains the Broadcast value should broadcast the message to all addresses in its routing table that match the class where 0xFC appears. For example, a shelf receiving a message with 0xXXXXFCFD would send messages to each of the cards. A value of 0xXXXXFCFC would cause each card to send the message and forward it to all class D devices.

The fifth special value that shall be described is the System Controller value. The System Controller value is 0xFB. The System Controller value applies only to the class B address. The System Controller value is used if a message is sent specifically to the system controller shelf.

Four examples of useful addresses shall now be presented. Application sends a message to a service somewhere on this shelf: 0xFEFEFFFD. Application sends a message to a service on this card: 0xFEFEFEFD. Application sends a message to a service that may be on any card of any shelf: 0xFFFFFFFD. Application broadcasts a message to all cards in the system: 0xFCFCFCFD

### Component Description

The UIPC of the present invention is divided into two major sections, the application program interface (API) and the protocol stack. The application program interface provides applications with a convenient means to send messages without having to know the details of the protocol or how the protocol is implemented. For the sake of clarity, suggested implementations are presented for an operating system that supports a flat memory model.

The UIPC of the present invention is intended to provide intertask communication both on and off processor across cards on the same shelf or across shelves.

The UIPC of the present invention is responsible for getting messages to their destinations. However, the content of the messages is the responsibility of the application. Therefore, the UIPC does not provide a mechanism to represent user data in a machine-independent format. This would be the responsibility of a presentation layer. Since the UIPC is intended to be used as a real-time protocol, the overhead associated with a presentation layer is not included.

The design of the UIPC component separates the application program interface from the protocol processing. This is done to allow efficient intraprocessor communication that does not require a protocol stack while allowing for interprocessor communication which does require a protocol stack. The UIPC application program interface exists as a library that is called from the context of an application task. An application invokes the UIPC application program interface to send and receive messages. The UIPC application program interface may communicate with the UIPC Protocol Task (also known as "UIPC task") for interprocessor messaging. It does so by sending messages to the UIPC Protocol Task's queue.

The application program interface (API) is a shared library that can be used by any task. The application program interface provides the interface to all external functionality provided by the UIPC. The application program interface handles intraprocessor operations without going through the UIPC task. It does this by examining endpoint handles that are passed in to see if they represent on or off processor endpoints. If it is on processor, a message is sent by invoking the operating system independent access layer (OIA) messaging application program interfaces directly to a message queue pointed to by the endpoint. If it is off processor, it sends a message to the UIPC protocol task's message queue.

Uipc_InitCardContext() is called to initialize the UIPC of the present invention.

### UIPC Internal Tables

### Global Table

| UIPC Global Table | | | | | | |
|---|---|---|---|---|---|---|
| Task ID | Application ID | Pointer to Dynamic Message Handler Table of the Task | Pointer to Static Messag e Handler Table of the Task | Pointer to Dynamic Message Class Table of the Task | Pointer to Idle Message Handler of the Task | Wait Time used within Uipc_RcvLoop() |
| | | | | | | |

The Global table contains the information about all the tasks in a particular card. Each entry in the Global table is a task control block (TCB). Each task control block will have task specific information.

The first field of the task control block is the Task ID. The second field in the task control block is the Application ID. This will be the Application ID of the Main Queue of the Task.

Each task will have a dynamic message handler table, static message handler table, and dynamic message class table. Whenever a task invokes Uipc_RegisterOneTimeApi(), an entry will be made in the dynamic message handler table of the task. The entries in this dynamic message handler table will not be permanent. The entry will be deleted as soon as the response of the one time application program interface has arrived. The dynamic message handler table will be implemented using balanced binary trees. Whenever a task invokes Uipc_RegisterMsgHandler(), an entry will be made in the static message handler table. The static message handler table is dedicated for observer application program interfaces. Unlike the dynamic message handler table, the entries in the static message handler table will be permanent. The static message handler table will be implemented using arrays.

Whenever a task invokes Uipc_GenerateTempMsgClass(), a message class will be returned to the task, and in the dynamic message class table the necessary updating will be done such that the particular message class is busy. Whenever the task invokes Uipc_FreeTempMsgClass(), the UIPC will make necessary modification in the dynamic message class table so that the particular message class can be used in future. The dynamic message class table will also be implemented as an array.

The Global table contains pointers to all the above-mentioned tables. In addition to this, the Global table also contains pointer to the Idle Message Handler function of the task. The Global table will also contain wait time that has to be used within Uipc_RcvLoop() for each tasks. Each time within the Uipc_RcvLoop() application program interface, the global table will be queried for the wait time. Since the global table will be accessed by all the tasks, a semaphore will protect the global table. This semaphore will be created during Uipc_InitCardContext().

Every time Uipc_InitTaskContext() is called, an entry is made in the global table with valid values entered for tid and waitTime for that task, and memory is allocated for the static message handler table and dynamic message class table. The appId, pointer to idle message handler table, and the pointer to the dynamic message handler table is set to NULL.

During Uipc_SetMainQueue() the appId is filled, and in Uipc_RegisterIdleHandler(), the pointer to the idle message handler is filled.

### Dynamic Message Handler Table

Each task has to implement this dynamic message handler table. This table is dedicated to one time application program interfaces (APIs).

| UIPC Dynamic Message Handler Table | | |
|---|---|---|
| Message Class | Call Back Fn | Timer Handle |
| | | |

The dynamic message handler table has three fields in it. The first field is the message class, the second field is the callback function pointer, and the third field is the timer handle. Whenever a task invokes Uipc_RegisterOneTimeApi(), an entry will be made in the dynamic message handler table of the task. Whenever a message arrives with message direction, as UIPC_MSG_RSP, the table will be looked up with the message class to find the corresponding callback function. After invoking the callback function, the entry will be deleted from the dynamic message handler table of the task. The entries in the dynamic message handler table will not be permanent. The UIPC private application program interface Uipc_DeleteMsgHndlrTableEntry() will be invoked for deleting an entry from the dynamic message handler table. The entry will be deleted as soon as the response of the one time application program interface has arrived. Even if a timeout condition occurs (if the response does not reach within a specified time), the entry in the dynamic message handler table will be deleted. The above layer will be informed about the message arrival or timeout through the UIPC Control Data. The dynamic message handler table will be implemented using balanced binary trees.

### UIPC Static Message Handler Table

Each task has to implement a static message handler table.

| UIPC Static Message Handler Table | |
|---|---|
| Message Class | Call Back Fn |
| | |

Whenever a task invokes Uipc_RegisterMsgHandler(), an entry will be made in the static message handler table. The static message handler table is dedicated for observer application program interfaces. Whenever a message arrives with the message direction, as UIPC_MSG_REP or UIPC_MSG_REQ, the table will be looked up with the message class to find the corresponding callback function. The callback function will be invoked if the entry is found. Unlike the dynamic message handler table, the entries in the static message handler table will be permanent. The static message handler table will be implemented using arrays. There is no need for semaphore to protect this table, as each table will have its own static message handler table.

### UIPC Dynamic Message Class Table

Each task has to implement a dynamic message class table. Whenever the task invokes Uipc_GenerateTempMsgClass(), a free message class within the dynamic message class range (UIPC_DYN_MSG_CLASS_START to UIPC_MAX_NO_DYN_MSG_CLASS) will be given to the task. If no free message class is available, the unavailability will be reported to the application program interface user. After allocating a free message class the table will be updated such that the particular message class is made busy. Whenever the task invokes Uipc_FreeTempMsgClass(), the message class will be freed so that the particular message class can be used in future. There is no need for semaphore to protect this table, as each table will have its own dynamic message class table.

### UIPC STACK

The UIPC application program interface (API) may communicate with the UIPC Protocol Task (also known as "UIPC task") for interprocessor messaging. It does so by sending messages to the UIPC Protocol Task's queue. A UIPC Routing Library is also shown. The UIPC Routing Library allows either the UIPC application program interface or UIPC Protocol Task to determine how to route messages. This is based on the application ID and network address. For intraprocessor communication, it would be inefficient for all messages to pass through the UIPC Protocol Task. Therefore, the UIPC application program interface first invokes the routing library to see if a message can be sent directly to a task's queue on the same processor. If not, the UIPC application program interface will forward the message to the UIPC Protocol Task. The UIPC Protocol Task will pass the messages through the protocol stack. At the network layer of the stack, the routing application program interface will again be invoked to determine on which physical link the message should be sent.

Note that the UIPC Task may consist of subtasks. This is dependent on the implementation of the protocol stack layers. However, from the point of view of the UIPC application program interface, it only needs to know about and communicate with a single UIPC Protocol Task. What happens after the UIPC application program interface passes a message to the UIPC Task is hidden.

A note on the routing library is also appropriate. Routing is the responsibility of both the transport and network layers of the protocol. The network layer determines which physical link a message should be sent to. The network layer makes that determination based on the network address. The transport layer determines which application a message should be sent to. The transport layer makes that determination based on both the application ID and network address. It depends on the implementation how these routing tables are implemented. The routing tables for network and transport layers may be kept separate so as to decouple the two layers. However, from the point of view of functions external to the Protocol Task (for example, the UIPC application program interface), certain routing functions are required regardless of how the stack is implemented. Therefore the Routing Library is shown as a separate entity. In reality, it may simply provide a thin application program interface on top of functions exposed by the network and transport layers.

### Protocol Layers

The open systems interconnect (OSI) stack model is used to define the layers of functionality that exist in a communications protocol. Open systems interconnect (OSI) is a model of network architecture and a suite of protocols to implement it. The suite of protocols can be referred to as a protocol stack. The OSI architecture is split between seven layers, from lowest to highest: (i) physical layer, (ii) data link layer, (iii) network layer, (iv) transport layer, (v) session layer, (vi) presentation layer, and (vii) application layer.

The UIPC stack model of the present invention follows the open systems interconnect (OSI) definition, but does not necessarily include all seven layers specified by open systems interconnect (OSI). The UIPC protocol is tailored towards a real-time system and does not require the functions of all of the open systems interconnect (OSI) layers.

The functionality of the layers of the present invention is described in the following sections. However, before discussing the specifics of each layer, the following general requirements apply to every layer. These are intended as guidelines for the implementer of the layers.

The header for each layer should contain a protocol discriminator. The discriminator indicates which protocol or combination of protocols is being carried in the message. It is typically two or three bits inside the header. This allows different protocols to be implemented in the future without changing the other protocols. For example, an incoming message being processed by the network layer would have a protocol discriminator in the network layer header that indicated which protocol module should be the next to process the message. If the UIPC were to support transport layer protocols such as transmission control protocol (TCP) or user datagram protocol (UDP), the protocol discriminator would tell the network layer whether to pass on the message to the transmission control protocol or the user datagram protocol module. User datagram protocol (UDP) refers to Internet standard network layer, transport layer, and session layer protocols which provide datagram services. User datagram protocol is a connectionless protocol which, like TCP, is layered on top of Internet protocol (IP).

Some protocol layers may depend on others and may not be able to be used independently. Consider, for example, LAPD, which is a link layer protocol that depends on a physical high level data link control (HDLC) layer. The acronym "LAPD" represents link access procedure on the D channel.

Each layer shall preserve message priority. High priority messages or segments (in the case of long messages that need to be segmented) shall always be transmitted before other messages or segments. It is recommended that only two priorities be supported for the present invention, normal and high. Any more would create confusion. However, additional priorities can be supported by the present invention.

Each layer should provide flags to allow the protocol at that layer to be extended in the future. An example of how this might be used is for the network layer to reserve a special flag value to allow extended addressing.

Each layer may define special control messages that are exchanged between the same layers at endpoints. These control messages may allow either side to negotiate protocol parameters or perform flow control.

The following sections describe the characteristics and responsibilities of each protocol layer. Each section also includes a list of primitives that the layer should provide. The primitives are intended to show the external interface provided to other software (that is, the next protocol layer up). They do not describe the actual messages that are passed between two endpoints. The definition of such messages and any associated state machines are not described here. They are to be defined when the detailed design is performed.

The primitives are named using International Telecommunications Union (ITU) terminology and are categorized as Request, Response, Indication, and Confirm.

Request: This is a function that the layer must support and is intended to be invoked by the next layer above it to request some action.

Response: This is invoked by the far end when an indication requiring a response is received. As a result, the requestor will receive a confirm.

Indication: This is a notification that an event has occurred. It is intended that the next layer up or the code that created a later receives these indications. Most indications are a result of the far end initiating some action via a request.

Confirm: This is a confirmation that the request has been responded to.

Each primitive has primitive-specific data associated with it. The mechanism for passing primitives between layers is not specified here as it is part of the detailed design of the layers.

It is also important to note that a maximum transmission unit (MTU) must be defined. A maximum transmission unit (MTU) defines the maximum message size. Any messages that are under this size are transmitted as a single message. Thus high priority time-critical messages can be processed in no longer than the time it takes to transmit two messages of maximum transmission unit length (one time period for the message being transmitted, and one more time period for the high priority message to be transmitted). To guarantee that this is the case, there is a 1-to-1 correspondence between a network layer message, a link layer message, and a physical layer (for example, high level data link control) frame. Tying messages together at these levels is needed to help guarantee real-time performance.

Determining the maximum transmission unit is part of the application design. As such, it is not defined as part of the UIPC. However, the UIPC does define an internal application program interface (API) that is visible only to the UIPC component to set the maximum transmission unit. The maximum transmission unit is determined by the application performance requirements, the number of hops a message is expected to take, and the speed of the communication links being used.

There is a complication that arises from networks that route messages from one node to the next. If the maximum transmission units (MTUs) for each hop are not the same, something must be done to resolve the disparity. The problem occurs when one node transmits a message with a large MTU and the message is relayed through a node over a hop that has a small MTU. It would be difficult for one node to know all MTUs of all links over which a message will travel. In fact, a sending node may not even know what links will be traveled. All it knows is how to get the message to the next node. Therefore, the protocol stack at each node should resolve the differences between MTU sizes on links that are connected to that node. As described in this specification in the "Network Layer" section hereinbelow, the network layer has a message segmentation function. This should be utilized to segment larger MTUs into smaller MTUs. If the network layer were not to do this at each node, the alternative would be to establish an end-to-end connection and negotiate, through all the nodes, what the maximum MTU should be. However, this method incurs overhead and will not work for connectionless messages.

### Link Layer

The link layer is responsible for establishing data links between endpoints and ensuring error-free transmission of data between those endpoints. See the aforementioned document "Open Systems Interconnection, Data Link Service Definition, ITU-T X.212." Depending on the network topology, there may be multiple channels on which the link layer must communicate or messages may be broadcast on a single shared bus. The link layer ensures point-to-point delivery of messages, and can request retransmission of lost or out-of-sequence messages. Link access procedure on the D channel (LAPD) is a good choice for this layer in systems with point-to-point links or a star communication bus architecture. Link access procedure on the D channel (LAPD) uses high level data link control to frame messages, perform error detection, and address physical endpoints. High level data link control alone can be considered a link layer protocol. However, it does not guarantee message delivery via retries. It only guarantees messages are error free. Note that link access procedure on the D channel (LAPD) does not include a mechanism for message priority. It would therefore need to be modified to prioritize messages.

In addition to the requirements of all protocol layers, the link layer has the following responsibilities: (i) If the link layer is stateful, it may need to provide queuing of outgoing messages. (ii) If any flow control is needed, it is the responsibility of the link layer. This simplifies the implementation of the upper layer protocols. (iii) Ensure that data is error-free. (iv) If connection-oriented links are desired, establish and maintain links. The term "connection-oriented" in the preceding sentence should not be confused with end-to-end connection-oriented service which is provided by the transport layer. (v) If the physical link is not reliable, retry errored messages.

### Primitives

For connection-oriented data links, Table 1 contains the minimally required primitives. Note that the primitives are broken down into categories according to whether a link is established or not. Table 2 contains primitives for connectionless service. These tables were derived from the aforementioned document "Open Systems Interconnection, Data Link Service Definition, ITU-T X.212." Following the tables are definitions for the parameters that accompany the primitives.

**Table 1 -**

| Summary of data-link-connection-mode primitives and parameters | | |
|---|---|---|
| Service | Primitive | Parameters |
| Linkestabli shment | DL-CONNECT request (Initiate a connection with the far end or a physical channel) | (channel ID, near end address, far end address, MTU size) |
| | DL-CONNECT indication (Received when far-end has initiated a connection to you) | (channel ID, near end address, far end address, MTU size) |
| | DL-CONNECT response (Invoked by the receiver of a DL-CONNECT indication to accept the connection) | (channel ID, near end address, far end address) |
| | DL-CONNECT confirm (Tells the side that initiated the connection that the far end has accepted the connection) | (channel ID, near end address, far end address) |
| Normal datatransfe r | DL-DATA request (Sender uses this to send data) | (channel ID, far end address, protocol descriptor, user-data, priority) |
| | DL-DATA indication (Receiver gets this when data is received) | (channel ID, far end address, protocol descriptor, user-data, priority) |
| Link release | DL-DISCONNECT request (Either side may initiate this disconnect. There is | (channel ID, far end address , Reason) |
| | no response) | |
| | DL-DISCONNECT indication (Received when the far end has disconnected) | (channel ID, far end address , Originator, reason) |

**Table 2-**

| Summary of data-link-connectionless-mode primitives and parameters | | |
|---|---|---|
| Service | Primitive | Parameters |
| Normal datatransfe r | DL-DATA request (Sender uses this to send data) | (channel ID, far end address, protocol descriptor, user-data, priority) |
| | DL-DATA indication (Receiver gets this when data is received) | (channel ID, far end address, protocol descriptor, user-data, priority) |

The parameters are defined as follows. The term "channel ID" refers to an identifier to tell the data link layer which physical channel is being used. The term "user data"refers to the data that is transmitted. It is transparent to the data link layer. The term "far end address"refers to the address of the other end of the link. This is optional and is used only if multiple data links are established on the same physical channel. For multipoint bus architectures, there should be a special address that is available for broadcast. The term "near end address" refers to the address to use in the message for any responses the far-end may send. The term "MTU size" refers to the maximum transmission unit size. This indicates the largest DLS user data packet that can be transmitted across the link. The term "near end address" refers to the address assigned to the near end for the data link. This is optional and is used only if multiple data links are established on the same physical channel. The term "Originator" refers to indicates if the action was originated by the user of the data link layer or the data link layer itself. The term "priority" refers to indicates the priority of the DLS user data. The term "protocol descriptor" refers to an identifier for what higher level protocol is carried in the user data. The term "Reason" refers to a reason code for an action. This is implementation specific.

### Network Layer

The network layer is responsible for getting messages between processors. The network layer has the following characteristics.

The network layer routes messages based on network address. The network layer examines the network address to determine whether a message is destined for the processor on which it was received or if the message needs to be forwarded across another interface to get to its final destination.

The network layer supports message segmentation/reassembly. Because different links may have different sized maximum transmission units (MTUs), combined with the fact that the network layer may route messages without passing them to the transport layer, the network layer also handles conversion between MTU sizes. This means message segmentation and reassembly is supported at this layer.

The network layer corresponds to stateless operation. Because the network layer does not provide reliable point-to-point or end-to-end message transmission, it is stateless. Once a message is sent, it is forgotten. Point-to-point reliability is the responsibility of the data link layer. End-to-end reliability, if necessary, is the responsibility of the transport layer.

### Class D Routing - Special Case

The network layer must also support routing messages to devices attached to cards. It is possible that some of these devices communicate via UIPC. In this case, they would have class D addresses and messages would be routed to them just like they would be to any other address. If they do not speak UIPC, the network layer must implement a means whereby, the devices can have virtual addresses. In this case a proxy application would run on a card and register to receive messages for particular class D addresses. The proxy application would be responsible for receiving these messages and forwarding them to the devices. Additionally, these messages do not need to use the transport layer protocol since they are not destined for applications.

Note that the primitives only loosely correspond to the International Telecommunications Union (ITU) definitions. See the aforementioned document "Open Systems Interconnection, Network Service Definition, ITU-T X.213." This is because the International Telecommunications Union (ITU) uses a more complicated model than is needed for the UIPC. It models the network layer as a connection between two endpoints. A connection-oriented network layer over-complicates the network layer since the link layer already provides for this. The network layer of the UIPC is modeled more as a packet-based protocol like Internet protocol (IP) where connections are not needed. Additionally, the International Telecommunications Union (ITU) does not define any mechanism whereby network addresses are assigned. It assumes that this information is somehow available to the network layer. Therefore the UIPC defines additional address-related primitives so that the network layer has an interface to perform address assignment functions.

### Primitives

The external interface to the network layer is shown in the primitives of Table 3.

**Table 3-**

| Summary of network layer primitives and parameters | | |
|---|---|---|
| Service | Primitive | Parameters |
| Normal datatransfer | N-DATA request (Sender uses this to send data) | (far end network address, protocol descriptor, user-data, priority) |
| | N-DATA indication (Receiver gets this when data is received) | (far end network address, protocol descriptor, user-data, priority) |

The parameters are defined as follows. The term "far end network address" refers to address of the node to which an operation is directed. The term "priority" refers to the priority of the user data. The term "protocol descriptor" refers to an identifier for what higher level protocol is carried in the user data. The term user "data" refers to the data that is transmitted. The user data is transparent to the network layer.

Note that the primitives only loosely correspond to the International Telecommunications Union (ITU) definitions. See the aforementioned document "Open Systems Interconnection, Network Service Definition, ITU-T X.213." This is because the International Telecommunications Union (ITU) uses a more complicated model than is needed for the UIPC. It models the network layer as a connection between two endpoints. A connection-oriented network layer over-complicates the network layer since the link layer already provides for this. The network layer of the UIPC is modeled more as a packet-based protocol like IP where connections are not needed. Additionally, the International Telecommunications Union (ITU) does not define any mechanism whereby network addresses are assigned. It assumes that this information is somehow available to the network layer. Therefore the UIPC defines additional address-related primitives so that the network layer has an interface to perform address assignment functions.

Based on the operations required of the network layer, the following information should be part of the network layer message header: Destination address, Source address, Network message type (may be some sort of network layer control or a user data message), Segmentation information (for messages that are segmented), Control (used for network layer control messages and to indicate type of message).

### Transport Layer

The transport layer is responsible for end-to-end communication between applications. It has the following characteristics:

Route messages to different applications or services as endpoints - The transport layer introduces the concept of an application ID. Applications may register themselves to receive messages destined for a particular application ID. This supports client/server applications. This layer will determine that the message should be routed to a task on this processor.

Message-based - Invoking the transport layer with a write operation and a buffer, the data in the buffer will be received on the far end in a single read operation. The buffer can be viewed as a message. This is in contrast to a streams-based approach where a read operation simply receives the bytes that happen to be available regardless of whether they were transmitted in a single or multiple write operations.

Provides connectionless messaging. In this case the application and lower layers are relied on to assure reliable end-to-end transmission. To reduce overhead, the connectionless messaging does not track whether the far end actually received a message and that the message is valid. The lower layers already assure that messages are valid via CRC checks and that messages get retransmitted on a link-by-link basis. Generally, if an application must know that the far-end application received a message, it expects an application level acknowledgement. Since these other layers share the work of guaranteeing valid end-to-end transmission, connectionless operation can be used. Note however, that the transport layer does have a mechanism to reject partial messages where segments of a long message may have been dropped. Since this is easier to implement than connection-oriented messaging, it is suggested that this be implemented first.

Provides connection-oriented messaging. In this case, an end-to-end connection is established and maintained for the application. This would be similar in function to a transmission control protocol (TCP) socket. There is additional overhead and complexity when setting up and communicating over a connection-oriented path. Therefore it is recommended that this mode be used only when communication is not expected to be reliable or when resource or real-time concerns are less. While not specified here, the low-level design to support both connectionless and connection-oriented messaging might include the use of two separate transport layer modules or a single module that implements both types of messaging.

Multiplexes messages from varying endpoints - Given that multiple endpoints may be transmitting to the same application, the transport layer assembles messages based on the source address.

### Building a Routing Table

In order to route messages to particular applications, the transport layer is responsible for building a routing table of application ID to real message queue ID mappings. Access to the routing table needs to be exposed via an internal application program interface (API) that is visible only to the UIPC component. This is needed so that an efficient query can be made by the UIPC application program interface functions to determine if a message should be routed on or off the processor.

### Primitives

The external interface to the transport layer is shown in the primitives of Table 4. Note that the connection establishment and release primitives apply only to connection-oriented mode.

**Table 4 -**

| Summary of Transport Layer Primitives and Parameters | | |
|---|---|---|
| Service | Primitive | Parameters |
| Connection establishm ent (connectio n-oriented only) | T-CONNECT request (Initiate a connection with an application. Responses will be associated with the queue handle) | (far-end network address, far-end application ID, near end application ID queue handle) |
| | T-CONNECT indication (Received when far-end has initiated a connection to an application) | (far-end network address, far-end application ID, near end application ID) |
| | T-CONNECT response (Invoked by recipient of T-CONNECT indication to accept the connection) | (far-end network address, far-end application ID, queue handle) |
| | T-CONNECT confirm (Tells the side that initiated the connection that the connection is now made) | (far-end network address, far-end application ID, near end application ID) |
| Normal datatransfe r | T-DATA request (Sender uses this to send data) | (far-end network address, far-end application ID, near end application ID, protocol descriptor, user-data, priority) |
| | T-DATA indication (Receiver gets this when data is received) | (far-end network address, far-end application ID, near end application ID, protocol descriptor, user-data, priority) |
| Connection release (connectio n-oriented only) | T-DISCONNECT request (Either side may initiate this disconnect. There is no response) | (far-end network address, far-end application ID, near end application ID, Reason) |
| | T-DISCONNECT indication | (far-end network address, |
| | (Received when the far end has disconnected) | far-end application ID, near end application ID, Originator, reason) |

The term "application ID" refers to an identifier for the application. This is used to distinguish individual services provided by a processor that may have a given network address. Applications may have well-known IDs whereby other applications can address them. An application ID is portable across processor boundaries. The application ID and network address together combine to make a unique address for an application.

The term "far end network address" refers to the address of the node to which an operation is directed. The term "near end network address" refers to the address assigned to the near end. The term "Originator" indicates if the action was originated by the user of the transport layer or the transport layer itself. The term "priority" indicates the priority of the user data. The term "protocol descriptor" refers to an identifier for what higher level protocol is carried in the user data.

The term "queue handle" refers to the handle to the queue that is to receive messages directed towards a particular application ID. A queue handle points to information regarding the application ID of the owner of the queue.

The term "Reason" refers to the reason code for an action. This is implementation specific.

The term "user data" refers to the data that is transmitted. It is transparent to the transport layer.

Note that the transport layer has primitives that do not correspond to the anything in the International Telecommunications Union (ITU) definitions. See the aforementioned document "Open Systems Interconnection, Transport Service Definition, ITU-T X.214." This is because the International Telecommunications Union (ITU) does not have primitives for setting transport service access points (TSAPs). Transport service access points roughly correspond to application IDs. The International Telecommunications Union (ITU) assumes that transport service access points are registered by some other means and the information is available to the transport layer. Instead, the UIPC transport layer has additional primitives to register the application IDs and build routing tables based on them.

### Message Header Recommendations

Based on the operations required of the transport layer, the following information should be part of the network layer message header: Originating application ID, Terminating application ID, Control (used for transport layer control messages and to indicate type of message).

### Application Layer

The UIPC of the present invention does not include an application layer protocol.

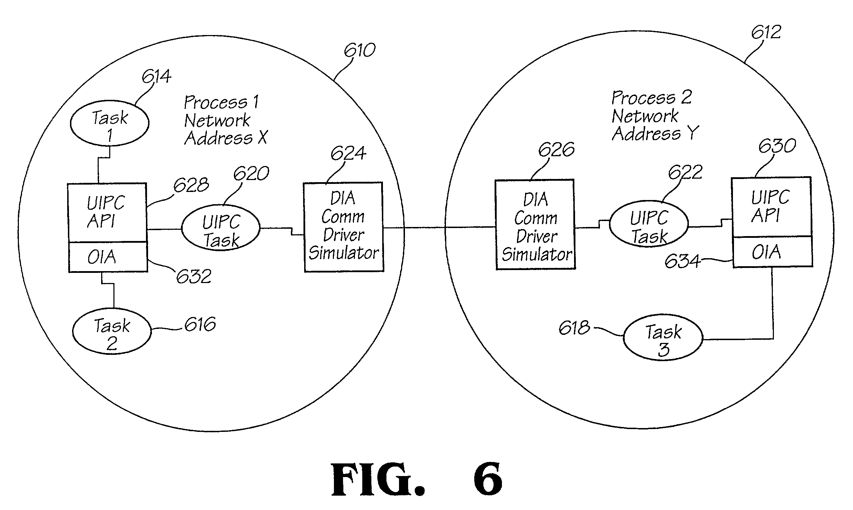

Fig. 6 is a test methodology to verify the component functionality, in accordance with the principles of the present invention. Fig. 6 shows black box testing. Fig. 6 shows a possible configuration for testing, in accordance with the principles of the present invention. It relies on the operating system independent access layer (OIA) to abstract the operating system calls so that the test system can run on a workstation's operating system. There are two processes running: process 1 (610) and process 2 (612). In each process are threads that represent real time operating system tasks. Because the processes run in separate memory spaces, each can have an instance of UIPC running independently of the other. Thus they can be each have their own UIPC network address. Task 1 (614), task 2 (616), and task 3 (618) represent applications that can drive the UIPC application program interfaces (APIs) 628 and 630. The UIPC task 620 runs inside process 1. The UIPC task 622 runs inside process 2. The UIPC application program interfaces run on top of the operating system independent access (OIA) layers 632, 634 and are available to the tasks. UIPC uses operating system independent access (OIA) layer for message queue functions. In order to simulate interprocessor communication, device independent access (DIA) layer communication driver simulators 624 and 626 are used. These simulators might just use something like sockets. They might also allow error injection to verify the protocol handles errors. Since this is a test of the UIPC component and not device independent access (DIA) layer, the only thing the simulators need to be able to do is get messages between the two processes. The Fig. 6 may be extended to include other processes to simulate different class routers.

To run tests, tasks 1-3 can be programmed to run sequences of UIPC application program interfaces (APIs) and verify the results automatically. Other options include using scripts or allowing a user interface to execute commands. Regardless of how they drive the UIPC, it is done from a black box perspective. The tasks look to UIPC like any other tasks.

While the present invention has been illustrated by the description of embodiments thereof, and while the embodiments have been described in considerable detail, it is not the intention of the applicant to restrict or in any way limit the scope of the appended claims to such detail. Additional advantages and modifications will readily appear to those skilled in the art. Therefore, the invention in its broader aspects is not limited to the specific details, representative apparatus and method, and illustrative examples shown and described.

## Claims

1. A communication method for conveying message data from a source to a destination, the method comprising:
transmitting message data independently of an operating system of a communication apparatus, said transmitting being performed at least in part by an operating system independent access layer; and
transferring message data independently of hardware of the apparatus, said transferring being performed at least in part by a device independent access layer.

2. The method of claim 1, wherein the apparatus forms a shared bus topology for intershelf messages.

3. The method of claim 1, wherein the apparatus forms a star bus topology for intershelf messages.

4. The method of one of the claims 1 to 3, further comprising:
processing internal communications within the apparatus with an operating system portion of the apparatus; and
processing external communications to and from the apparatus with a hardware portion of the apparatus.

5. The method of claim 1, further comprising performing said conveying of message data from the source to the destination when the source and destination are both on a first shelf of the apparatus, and when the source is on the first shelf and the destination is on a second shelf of the apparatus, and when the source is on a first card of the second shelf and the destination is on a second card on the second shelf, and when the source is on the first shelf and the destination is external to the apparatus and not on any one of the shelves.

6. A communication apparatus for transferring message data from a source to a destination, the apparatus comprising:
an operating system portion of the apparatus for processing internal communications within said apparatus independently of an operating system of said apparatus; and
a hardware portion of the apparatus for processing external communications to and from said apparatus independently of hardware devices in said apparatus.

7. The apparatus of claim 6, further comprising a shared bus topology for intershelf messages.

8. The apparatus of claim 6, further comprising a star bus topology for intershelf messages.

9. The apparatus of claim 6, further comprising:
a first shelf including at least a first card; and
a second shelf including at least a second card and a third card;
said apparatus being adapted for performing said transferring of message data from the source to the destination when the source and destination are both on said first shelf, and when the source is on said first shelf and the destination is on said second shelf, and when the source is on said second card and the destination is on said third card, and when the source is on said first shelf and the destination is external to said apparatus and not on any one of said shelves.

10. A computer-readable storage medium having stored thereon a set of computer-executable instructions for implementing a method for conveying message data from a source to a destination, according to any one of the claims 1 to 5.
